(19) Europäisches Patentamt
European Patent Office
Office européen des brevets

(11) **EP 3 442 098 A1**

(12) **EUROPEAN PATENT APPLICATION**
published in accordance with Art. 153(4) EPC

(43) Date of publication:
**13.02.2019 Bulletin 2019/07**

(21) Application number: **17779252.0**

(22) Date of filing: **10.04.2017**

(51) Int Cl.:
*H02K 3/30* (2006.01)     *H01B 17/60* (2006.01)
*H01F 5/06* (2006.01)     *H01F 41/12* (2006.01)

(86) International application number:
**PCT/JP2017/014724**

(87) International publication number:
**WO 2017/175875 (12.10.2017 Gazette 2017/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.04.2016 PCT/JP2016/061622**

(71) Applicant: **Hitachi Chemical Co., Ltd.**
**Chiyoda-ku**
**Tokyo 100-6606 (JP)**

(72) Inventors:
• **YAMAMOTO, Takaya**
  **Tokyo 100-6606 (JP)**
• **MUROMACHI, Miyuki**
  **Tokyo 100-6606 (JP)**
• **TAKITA, Takao**
  **Tokyo 100-6606 (JP)**
• **FUKUSHIMA, Keiji**
  **Tokyo 100-6606 (JP)**
• **TAKEZAWA, Yoshitaka**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **COIL FOR ROTATING ELECTRICAL MACHINE, METHOD FOR PRODUCING COIL FOR ROTATING ELECTRICAL MACHINE, MICA TAPE, CURED PRODUCT OF MICA TAPE, AND INSULATING MATERIAL**

(57) A coil for a rotating electrical machine, the coil comprising a coil conductor and an insulating layer that is disposed around an outer periphery of the coil conductor, the insulating layer comprising a mica tape, the mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces that are obtained from the mica layer being separated from the backing layer.

FIG. 1

EP 3 442 098 A1

**Description**

Technical Field

The invention relates to a coil for a rotating electrical machine, a method for producing a coil for a rotating electrical machine, a mica tape, a cured product of a mica tape, and an insulating material.

Background Art

A coil that is used for a rotating electrical machine, such as a power generator or a motor (hereinafter, also simply referred to as a coil), generally includes a coil conductor and an insulating layer that is disposed around an outer periphery of the coil conductor in order to insulate the coil conductor from the external environment. As a material for forming an insulating layer, an insulating material using mica, which is referred to as a mica tape, is known (see, for example, International Publication No. 2015-053374). A mica tape is generally formed of a backing layer that includes a backing material and a mica layer that includes mica. A mica tape is impregnated with a resin component before or after it is wound around an object to be insulated, and an insulating layer is formed by curing the resin component.

[Summary of the Invention]

[Problems to be Solved by the Invention]

Mica, which is included in a mica layer, is a highly electrically insulating inorganic substance in the form of flakes. The greater the amount of mica there is in a mica layer, the greater the insulating effect of the mica layer tends to become. On the other hand, an increase in the amount of mica may increase a thickness of a mica tape and make it difficult to wind the mica tape around an object to be insulated, or may cause formation of voids or cracks in the insulating layer. Therefore, development of a technique to improve electrical insulating properties of a mica tape, without increasing the amount of mica in the mica layer, is anticipated.

In view of the above, the invention aims to provide a coil for a rotating electrical machine that has an insulating layer that exhibits an excellent electrical insulating property, and a method of producing the coil for a rotating electrical machine. The invention also aims to provide a mica tape capable of forming an insulating layer that exhibits an excellent electrical insulating property, a cured product of the mica tape, and an insulating material using the mica tape.

[Means for Solving the Problems]

The means for solving the problems include the following embodiments.

<1> A coil for a rotating electrical machine, the coil comprising a coil conductor and an insulating layer that is disposed around an outer periphery of the coil conductor, the insulating layer comprising a mica tape, the mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces that are obtained from the mica layer being separated from the backing layer.

<2> The coil for a rotating electrical machine according to <1>, wherein the mica comprises mica pieces having a particle size of 0.5 mm or more, as measured by a JIS standard sieve, at a proportion of 40% by mass or more of a total of the mica pieces that are obtained from the mica layer being separated from the backing layer.

<3> A coil for a rotating electrical machine, the coil comprising a coil conductor and an insulating layer that is disposed around an outer periphery of the coil conductor, the insulating layer comprising a mica tape, the mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces in the mica layer.

<4> The coil for a rotating electrical machine according to <3>, wherein the mica comprises mica pieces having a particle size of 0.5 mm or more, as measured by a JIS standard sieve, at a proportion of 40% by mass or more of a total of the mica pieces in the mica layer.

<5> The coil for a rotating electrical machine according to any one of <1> to <4>, wherein an amount of the mica in the mica layer is 200 g/m$^2$ or less.

<6> The coil for a rotating electrical machine according to any one of <1> to <5>, wherein an average thickness of the mica tape is 300 $\mu$m or less.

<7> The coil for a rotating electrical machine according to any one of <1> to <5>, wherein an average thickness of the mica tape is 220 $\mu$m or less.

<8> The coil for a rotating electrical machine according to any one of <1> to <7>, wherein an average thickness of the mica layer is 180 $\mu$m or less.

<9> The coil for a rotating electrical machine according to any one of <1> to <8>, wherein the backing layer further comprises an inorganic filler.

<10> The coil for a rotating electrical machine according to <9>, wherein the inorganic filler comprises boron nitride.

<11> The coil for a rotating electrical machine according to <9> or <10>, wherein the mica has an apparent volume of from 2.0 times to 5.0 times larger than a volume of the inorganic filler.

<12> The coil for a rotating electrical machine according to any one of <9> to <11>, wherein the inorganic filler has an average aspect ratio of from 1 to 10.

<13> The coil for a rotating electrical machine according to any one of <9> to <12>, wherein the inorganic filler has a volume average particle diameter of from 1 $\mu$m to 40 $\mu$m.

<14> The coil for a rotating electrical machine according to any one of <9> to <13>, wherein a content of the inorganic filler is from 20% by volume to 50% by volume of a total volume of a non-volatile component except for the mica and the backing material.

<15> The coil for a rotating electrical machine according to any one of <1> to <14>, wherein an average thickness of the mica tape is 120 $\mu$m or more.

<16> The coil for a rotating electrical machine according to any one of <1> to <15>, wherein the mica tape further comprises a cured product of a resin component.

<17> The coil for a rotating electrical machine according to <16>, wherein a content of the cured product of the resin component is from 25% by mass to 33% by mass of a total mass of the mica layer and the backing layer.

<18> The coil for a rotating electrical machine according to <16>, wherein a content of the cured product of the resin component is from 5% by mass to 15% by mass of a total mass of the mica layer and the backing layer.

<19> A mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces that are obtained from the mica layer being separated from the backing layer.

<20> The mica tape according to <19>, wherein the mica comprises mica pieces having a particle size of 0.5 mm or more, as measured by a JIS standard sieve, at a proportion of 40% by mass or more of a total of the mica pieces that are obtained from the mica layer being separated from the backing layer.

<21> A mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces in the mica layer.

<22> The mica tape according to <21>, wherein the mica comprises mica pieces having a particle size of 0.5 mm or more, as measured by a JIS standard sieve, at a proportion of 40% by mass or more of a total of the mica pieces in the mica layer.

<23> The mica tape according to any one of <19> to <22>, wherein an amount of the mica in the mica layer is 200 g/m$^2$ or less.

<24> The mica tape according to any one of <19> to <23>, wherein an average thickness of the mica tape is 300 $\mu$m or less and the mica tape is used as a prepreg mica tape.

<25> The mica tape according to any one of <19> to <23>, wherein an average thickness of the mica tape is 220 $\mu$m or less and the mica tape is used as a dry mica tape.

<26> The mica tape according to any one of <19> to <25>, wherein an average thickness of the mica layer is 180 $\mu$m or less.

<27> The mica tape according to any one of <19> to <26>, wherein the backing layer further comprises an inorganic filler.

<28> The mica tape according to <27>, wherein the inorganic filler comprises boron nitride.

<29> The mica tape according to <27> or <28>, wherein the mica has an apparent volume of from 2.0 times to 5.0 times larger than a volume of the inorganic filler

<30> The mica tape according to any one of <27> to <29>, wherein the inorganic filler has an average aspect ratio of from 1 to 10.

<31> The mica tape according to any one of <27> to <30>, wherein the inorganic filler has a volume average particle diameter of from 1 $\mu$m to 40 $\mu$m.

<32> The mica tape according to any one of <27> to <31>, wherein a content of the inorganic filler is from 20% by volume to 50% by volume of a total volume of a non-volatile component except for the mica and the backing material.

<33> The mica tape according to any one of <19> to <32>, wherein an average thickness of the mica tape is 120 $\mu$m or more.

<34> The mica tape according to any one of <19> to <33>, further comprising a resin component.

<35> The mica tape according to <34>, wherein a content of the resin component is from 25% by mass to 33% by mass of a total mass of the mica layer and the backing layer, and the mica tape is used as a prepreg mica tape.
<36> The mica tape according to <34>, wherein a content of the resin component is from 5% by mass to 15% by mass of a total mass of the mica layer and the backing layer, and the mica tape is used as a dry mica tape.
<37> A cured product of the mica tape according to any one of <19> to <36>.
<38> An insulating product, comprising an object to be insulated and an insulating layer that is disposed at at least a portion of a surface of the object to be insulated, the insulating layer being the cured product of the mica tape according to <37>.

[Effect of the Invention]

According to the invention, a coil for a rotating electrical machine that has an insulating layer that exhibits excellent electrical insulation, and a method of producing the coil for a rotating electrical machine, are provided. Further, according to the invention, a mica tape capable of forming an insulating layer that exhibits excellent electrical insulation, a cured product of the mica tape, and an insulating material using the mica tape, are provided.

[Brief Explanation of the Drawings]

Fig. 1 is a schematic sectional view of an exemplary structure of a mica tape of an embodiment.
Fig. 2 is a schematic view of an exemplary method of winding a mica tape around an object to be insulated.
Fig. 3 is an electron micrograph of a section of an insulating layer formed by using a mica tape.

[Embodiments for Implementing the Invention]

In the following, embodiments for implementing the invention are explained in detail. However, the invention is not limited to these embodiments. In the embodiments, the structural components (including elemental steps) thereof are not essential, unless explicitly mentioned. The numbers and numerical ranges also do not limit the invention.
In the specification, the step refers not only to a step that is independent from other steps but also a step that cannot be clearly distinguished from other steps, as long as the purpose of the step is achieved.
In the specification, the numerical range described as from A to B includes A and B as a minimum value and a maximum value, respectively.
In the specification, when the numerical ranges described in a stepwise manner, the minimum value or the maximum value of a numerical range can be substituted by the minimum value or the maximum value of another numerical range. Further, the minimum value or the maximum value of a numerical range described in the specification may be substituted by a value described in the Examples.
In the specification, when there are plural kinds of substances that correspond to the same component, the content of the component in a composition refers to a total content of the substances.
In the specification, when there are plural kinds of particles that correspond to the same component, the particle size of the component in a composition refers to a particle size of a mixture of the particles.
In the specification, when a region in which a layer exists is observed, the layer refers not only a layer that is formed over the entire region but also a layer that is formed only over a portion of the region.
In the specification, a laminate refers to a combination of stacked two or more layers, in which the layers may be fixed to each other or may be detachable from each other.

<Coil for rotating electrical machine (First Embodiment)>

The coil for a rotating electrical machine of the embodiment includes a coil conductor and an insulating layer that is disposed around an outer periphery of the coil conductor, the insulating layer comprising a mica tape, the mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces that are obtained from the mica layer being separated from the backing layer.

<Coil for rotating electrical machine (Second Embodiment)>

The coil for a rotating electrical machine of the embodiment includes a coil conductor and an insulating layer that is disposed around an outer periphery of the coil conductor, the insulating layer comprising a mica tape, the mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces in the mica layer.

The details or preferred embodiments of the mica tape used for forming an insulating layer of the coils of the embodiments are described later. The material, shape, size or the like of the coil conductor is not specifically limited, and may be selected depending on the purpose or the like of the coil.

<Method of producing coil for rotating electrical machine>

The method of producing a coil for a rotating electrical machine of the embodiment is a method of producing the coil for a rotating electrical machine as described above, and comprises a step of winding a mica tape around an outer periphery of a coil conductor and a step of forming an insulating layer from the mica tape being wound around the outer periphery of the coil conductor.

The method for wining a mica tape around an outer periphery of a coil conductor is not specifically limited, and may be performed by an ordinary method.

The method of forming an insulating layer from the mica tape that is wound around an outer periphery of the coil conductor is not specifically limited. For example, an insulating layer may be formed by heat-pressing the mica tape after winding the same around the coil conductor in order to allow the resin component, which is included in the mica tape, to flow from the mica tape and fill a space between the overlapping mica tapes, and then curing the resin component (in a case of a prepreg mica tape); or by impregnating the mica tape being wound around the coil conductor with a resin component by vacuum pressure impregnation (VPI), and then curing the resin component (in a case of a dry mica tape).

<Mica tape (First Embodiment)>

The mica tape of the embodiment is a mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces that are obtained from the mica layer being separated from the backing layer.

The JIS standard sieve used for the measurement is based on JIS-Z-8801-1:2006, and corresponds to ISO3310-1:2000. In a case of ISO3310-1:2000, a sieve having square meshes is preferably used, as with the case of JIS-Z-8801-1:2006.

The inventors have found that an insulating layer formed by using a mica tape of the embodiment exhibits superior electrical insulation, as compared to a mica tape in which a proportion of mica pieces having a particle size of 2.8 mm or more is 45% by mass or more of mica pieces that are obtained from the mica layer being separated from the backing layer. The reason for this is not clear, but it is considered that when the mica layer includes a large amount of mica pieces that are relatively small, a resin component sufficiently fills a space between the mica pieces and formation of voids in the mica layer is suppressed. As a result, separation of mica tapes from each other, which is caused due to voids in the mica tape when a pressure is applied thereto, is suppressed.

By using the mica tape of the embodiment, it becomes possible to reduce the thickness of the mica tape while ensuring necessary electrical insulation, because electrical insulation of the insulating layer can be improved without increasing the amount of mica. As a result, it becomes possible to provide a mica tape that is easy to wind around an object to be insulated. In addition, the mica tape of the embodiment makes it possible to form an insulating layer having excellent reliability by suppressing formation of voids in the mica layer and suppressing separation of mica tapes from each other.

The mica tape of the embodiment may be a mica tape that is used for a method in which an insulating layer is formed by winding a mica tape around an object to be insulated and curing a resin component that is previously included in the mica tape (prepreg mica tape) or may be a mica tape that is used for a method in which an insulating layer is formed by impregnating, with a resin component, a mica tape being wound around an object to be insulated and curing the same (dry mica tape).

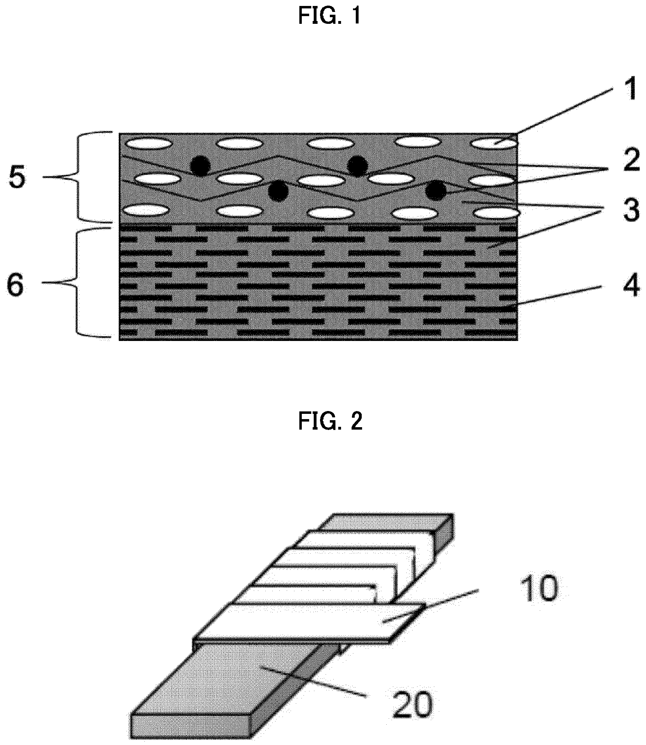

Fig. 1 shows a schematic sectional view of an exemplary structure of the mica tape of the embodiment. As shown in Fig. 1, the mica tape may have backing layer 5 that includes inorganic filler 1 and backing material 2, and mica layer 6 that includes mica 4. Backing layer 5 and mica layer 6 may include resin component 3, respectively. Backing layer 5 may not include inorganic filler 1. Although the mica tape shown in Fig. 1 is in a state in which the total backing layer 5 and the total mica layer 6 include resin component 3 (prepreg mica tape), the mica tape may also be in a state in which the total or a portion of mica layer 6 do not include resin component 3 (dry mica tape).

(Mica layer)

The mica layer include mica, and a proportion of mica pieces having a particle size of 2.8 mm or more, as measured by a JIS standard sieve, is less than 45% by mass of the total mica pieces obtained from the mica layer that is separated from the backing layer. From the viewpoint of improving electrical insulation, the proportion of mica pieces having a particle size of 2.8 mm or more is preferably 30% by mass or less, more preferably 20% by mass or less, of the total mica pieces.

From the viewpoint of ensuring a sufficient breakdown field strength, a proportion of mica pieces having a particle size of 0.5 mm or more, as measured by a JIS standard sieve, is preferably 40% by mass or more, more preferably 60% by mass or more, of the total mica pieces obtained from the mica layer that is separated from the backing layer.

The proportion of mica pieces having a particle size of 2.8 mm or more and the proportion of mica pieces having a particle size of 0.5 mm or more, as measured by a JIS standard sieve, of the total mica pieces obtained from the mica layer that is separated from the backing layer, may be determined by the following method, for example.

A razor is inserted in an interface of the backing layer and the mica layer of the mica tape, and the mica layer is separated from the backing layer. The separated mica layer (1 g) is dispersed in methyl ethyl ketone (100 g), and subjected to shaking for 10 minutes and centrifugation at 8000 rotations/minute (rpm) for 5 minutes. A solid content is recovered by removing a supernatant, and added with methyl ethyl ketone (100 g) and subjected to shaking for 10 minutes and centrifugation at 8000 rotations/minute (rpm) for 5 minutes. Further, a solid content is recovered by removing a supernatant, and added with methyl ethyl ketone (100 g) and subjected to shaking for 10 minutes and centrifugation at 8000 rotations/minute (rpm) for 5 minutes. Then, a solid content (1 g) is recovered by removing a supernatant, and added with methyl ethyl ketone (100 g) and subjected to dispersing with a mix rotor for 30 minutes and shaking for 10 minutes. Thereafter, while shaking the container, the content is sieved with a JIS standard sieve having a mesh size of 2.8 mm and a JIS standard sieve having a mesh size of 0.5 mm (JIS-Z-8801-1:2006, ISO3310-1:2000, Tokyo Screen Co., Ltd.) in this order.

As a result of the sieving, the amount of mica pieces that do not pass the 2.8 mm meshes, out of the total amount of mica pieces (% by mass), is determined as the proportion of mica pieces having a particle size of 2.8 mm or more as measured by a JIS standard sieve.

As a result of the sieving, the total of the amount of mica pieces that do not pass the 2.8 mm meshes and the amount of mica pieces that do not pass the 0.5 mm meshes, out of the total amount of mica pieces (% by mass), is determined as the proportion of mica pieces having a particle size of 0.5 mm or more as measured by a JIS standard sieve.

The type of mica included in the mica layer is not specifically limited. Examples of the mica include uncalcined hard mica, calcined hard mica, uncalcined soft mica, calcined soft mica, synthetic mica and flake mica. Among these, from the viewpoint of adhesion with respect to a resin component, uncalcined hard mica is preferred.

A single kind of mica may be used alone or two or more kinds of mica may be used in combination. Exemplary cases of two or more kinds of mica include two or more kinds of mica having the same components and different average particle diameters; two or more kinds of mica having the same average particle diameters and different components; and two or more kinds of mica having different average particle diameters and different components.

The amount of mica in the mica layer is not specifically limited. For example, the amount of mica may be in a range of from 100 $g/m^2$ to 200 $g/m^2$. When the amount of mica is 100 $g/m^2$ or more, reduction in electrical insulation tends to be suppressed. When the amount of mica is 200 $g/m^2$ or less, the thickness of the mica tape can be further reduced and reduction in thermal conductivity tends to be suppressed.

The mica layer may include a resin component or may not include a resin component. When the mica layer includes a resin component, the type of the resin component is not specifically limited. From the viewpoint of forming an insulating layer by curing the mica tape, the resin component is preferably a curable resin, more preferably a thermally curable resin. Examples of the curable resin include an epoxy resin, a phenol resin, an unsaturated polyester resin and a silicone resin. From the viewpoint of adhesion between the mica layer and the backing layer and electrical insulation, an epoxy resin is preferred. A single kind of resin component may be used alone, or two or more kinds may be used in combination.

Examples of the epoxy resin include bisphenol A epoxy resin, bisphenol F epoxy resin, phenol novolac epoxy resin, cresol novolac epoxy resin, naphthalene epoxy resin, and alicyclic epoxy resin. Among these, from the viewpoint of heat resistance, phenol novolac epoxy resin, bisphenol A epoxy resin and bisphenol F epoxy resin are preferred.

The number average molecular weight of the epoxy resin is not specifically limited. For example, from the viewpoint of fluidity, the number average molecular weight of the epoxy resin is preferably from 100 to 100000, more preferably from 200 to 50000, further preferably from 300 to 10000. The number average molecular weight of the epoxy resin is a value as measured by gel permeation chromatography (GPC) by an ordinary method under the following conditions.

[Measurement Conditions]

Pump: L-6000 (Hitachi, Ltd.)
Column: TSKgel (registered trade name) G4000HHR + G3000HHR + G2000HXL (Tosoh Corporation)

Column temperature: 40 °C

Eluting solvent: tetrahydrofuran (not containing a stabilizer for chromatography, Fujifilm Wako Pure Chemical Corporation)

Concentration: 5 g/L (solubles for tetrahydrofuran)

Injection amount: 100 μL

Flow rate: 1.0 mL/min

Detector: differential refractometer (RI-8020, Tosoh Corporation)

Standard substance for molecular weight calibration: standard polystyrene

Data processor: GPC-8020 (Tosoh Corporation)

The weight per epoxy equivalent of the epoxy resin is not specifically limited. For example, the weight per epoxy equivalent of the epoxy resin is preferably from 130 g/eq to 500 g/eq, more preferably from 135 g/eq to 400 g/eq, further preferably from 140 g/eq to 300 g/eq. The weight per epoxy equivalent of the epoxy resin can be measured by dissolving a precisely weighed epoxy resin to a solvent such as methyl ethyl ketone, adding acetic acid and an acetic acid solution of tetraethylammonium bromide, and performing potentiometric titration with an acetic acid standard solution of perchloric acid. An indicator may be used for the potentiometric titration.

When the mica layer includes a resin component, the resin component may include a curing agent. The type of the curing agent is not specifically limited, and may be selected depending on the type of the resin used as a resin component or the like.

In particular, when an epoxy resin is used as a resin component, a curing agent may be selected from those commonly used as a curing agent for an epoxy resin.

Specific examples of the curing agent include an amine curing agent such as dicyandiamide and an aromatic diamine; a phenol resin curing agent such as phenol novolac resin and cresol novolac resin; and an acid anhydride curing agent such as an alicyclic acid anhydride. A single kind of a curing agent may be used alone, or two or more kinds may be used in combination.

In a case in which an epoxy resin is a curable resin, the proportion of a curing agent and an epoxy resin is preferably from 0.8 to 1.2 based on an equivalent ratio (curing agent/epoxy resin) from the viewpoint of curability and electrical properties of a cured product.

When the mica layer includes a resin component, a curing accelerator may be used for the purpose of accelerating a curing reaction of the resin component. The type of the curing accelerator is not specifically limited, and may be selected depending on the type of the resin component.

Examples of the curing accelerator include a tertiary amine compound such as trimethyl amine, an imidazole catalyst such as 2-methyl imidazole and 2-methyl-4-ethyl imidazole, and an amine complex of a Lewis acid such as boron trifluoride monoethyl amine; and an organic phosphorus compound such as an organic phosphine compound. A single kind of curing accelerator may be used alone, or two or more kind may be used in combination.

When the mica layer includes a curing accelerator, the content thereof is not specifically limited. For example, when an epoxy resin is used as the resin component, the content of a curing accelerator is generally from 0.01% by mass to 5% by mass with respect to a total amount of the epoxy resin and the curing agent.

The mica layer may include a component other than mica or the component as mentioned above, such as additives of various kinds and inorganic fillers other than mica. Examples of the additives include a coupling agent, an elastomer, an antioxidant, an anti-aging agent, a stabilizer, a flame retardant and a thickener.

When the mica layer includes an inorganic filler other than mica, it is preferably included in such an amount that will not impair the properties of the mica tape such as flexibility.

The mica layer preferably includes no fibrit. When the mica layer includes a fibrit, the content thereof is preferably 1% by mass or less, more preferably 0.5% by mass or less, further preferably 0.1% by mass or less, particularly preferably 0% by mass. When the content of fibrit in the mica layer is 1% by mass or less, reduction in thermal conductivity tends to be suppressed. In the specification, the fibrit refers to a fibrous material that is mixed in the mica layer in order to allow the mica layer to be self-supporting. Examples of the fibrit include organic fibers of polyamide, polyimide and the like, and inorganic fibers such as glass fibers.

(Backing layer)

The backing layer includes a backing material. The type of the backing material is not specifically limited and a glass cloth may be used, for example. By using a glass cloth as a backing material, exfoliation of mica or inorganic filler contained as necessary from the mica tape is suppressed, whereby occurrence of breakage or cracking of the mica tape, during a process of winding the same around an object to be insulated, tends to be suppressed.

When a glass cloth is used as a backing material, a part of the glass cloth may be formed of organic fibers. The material of the organic fiber is not specifically limited, and examples thereof include alamide, polyamide, polyimide and polyester. When a part of the glass cloth is formed of organic fibers, the organic fibers may be used as either one of warp or woof, or may be used as both of them.

The average thickness of the backing material is not particularly limited. For example, the average thickness of the backing material is preferably from 10 μm to 60 μm, more preferably from 20 μm to 50 μm. When the average thickness of the backing material is 10 μm or more, reduction in thickness of the backing layer, which is caused along with a reduction in thickness of the backing material upon application of pressure to the mica tape, is suppressed, whereby reduction in thermal conductivity tends to be suppressed. When the average thickness of the backing material is 60 μm or less, an increase in the thickness of the mica tape can be suppressed, whereby occurrence of breakage or cracking of the mica tape, during a process of winding the same around an object to be insulated, tends to be suppressed.

In this embodiment, the average thickness of the backing material is an arithmetic average value of the values of the thickness measured at 10 sites with a micrometer (Mitsutoyo Corporation, MDC-SB).

The backing material may be subjected to a surface treatment, as necessary. Examples of the surface treatment include a treatment with a silane coupling agent.

The backing layer may include an inorganic filler. Examples of the inorganic filler include silica, boron nitride and alumina. From the viewpoint of thermal conductivity, boron nitride is preferred. Boron nitride exhibits a higher thermal conductivity than other inorganic fillers (such as alumina). Therefore, thermal conductivity of an insulating layer formed from the mica tape tends to improve by including boron nitride in the backing layer.

The type of boron nitride is not specifically limited, and examples thereof include hexagonal boron nitride (h-BN), cubic boron nitride (c-BN) and wurtzite-type boron nitride. Among these, hexagonal boron nitride (h-BN) is preferred. Boron nitride may be in a state of primary particles formed into scale-like shape, or in a state of secondary particles formed by aggregated primary particles.

The average particle size of the inorganic filler is not specifically limited. For example, the volume average particle size of the inorganic filler is preferably from 1 μm to 40 μm, more preferably from 5 μm to 20 μm. When the volume average particle size of the inorganic filler is 1 μm or more, thermal conductivity and insulation withstand voltage tend to improve. When the volume average particle size of the inorganic filler is 40 μm or less, a degree of anisotropy in thermal conductivity due to the anisotropy in particle shape of the inorganic filler tends to be suppressed.

The volume average particle size of the inorganic filler may be measured by, for example, a laser diffraction scattering particle size distribution meter (Nikkiso Co., Ltd., MICROTRAC MT3000 II). Specifically, an inorganic filler is dispersed in pure water with an ultrasonic disperser, thereby measuring the particle size distribution thereof. A particle diameter corresponding to 50% from the side of smaller particle size by volume (D50) based on the particle size distribution is determined as a volume average particle size.

The inorganic filler has an average aspect ratio of preferably from 1 to 10, more preferably from 1 to 5. The average aspect ratio of the inorganic filler is determined as an arithmetic average value of the aspect ratios, i.e., a ratio of the longest diameter to the shortest diameter (longest diameter / shortest diameter), of the representative 20 particles.

The method of measuring the average aspect ratio of the inorganic filler is not specifically limited. For example, the average aspect ratio can be measured with a micrometer from a SEM (scanning electron micrometer) image of a section of a cured mica tape including an inorganic filler at 3000-fold magnification. The SEM image may be obtained by cutting the cured mica tape in a thickness direction, and smoothing the section by ion milling and depositing platinum thereon.

A single kind of inorganic filler may be used alone, or two or more kinds may be used in combination. Exemplary cases of two or more kinds of inorganic filler include two or more kinds of inorganic filler having the same components and different average particle diameters; two or more kinds of inorganic filler having the same average particle diameter and different components; and two or more kinds of inorganic filler having different average particle diameters and different components.

When the backing layer includes an inorganic filler, the content thereof is not specifically limited. For example, the content of the inorganic filler is preferably from 20% by volume to 50% by volume, more preferably from 25% by volume to 35% by volume, of the total volume of a non-volatile component except for the mica and the backing material in the mica tape. When the content of the inorganic filler is 20% by volume or more of the total volume of the non-volatile component except for the mica and the backing material, thermal conductivity of an insulating layer formed from the mica tape tends to further improve. When the content of the inorganic filler is 50% by volume or less of the total volume of the non-volatile component except for the mica and the backing material, it tends to become easier for the inorganic filler to fill in the resin component.

The inorganic filler may be subjected to a surface treatment, such as application of a silane coupling agent, thermal treatment or optical treatment, as necessary. In a case of thermal treatment, for example, impurities on a surface of the inorganic filler can be removed by heating the inorganic filler at an appropriate high temperature (for example, at 250°C to 300°C) for 1 to 3 hours. As a result, compatibility of the inorganic filler with respect to a resin component tends to improve upon mixing, whereby the viscosity of the mixture (varnish) of the inorganic filler and the resin component tends to decrease and application of the mixture tends to become easier. In addition, occurrence of marks or irregulars in a coated surface of the varnish tends to be suppressed, and the flatness thereof tends to improve.

The backing layer may include a resin component, or may not include a resin component. When the backing layer includes a resin component, the type thereof is not specifically limited. For example, the backing layer may include the resin component that may be included in the mica layer as described above, and preferred embodiments of the resin component is also the same.

The backing layer may include a component other than the backing material, the resin component or the inorganic filler, such as a curing accelerator and additives of various kinds. Examples of the additives include a coupling agent, an elastomer, an antioxidant, an anti-aging agent, a stabilizer, a flame retardant and a thickener.

(Total structure of mica tape)

The average thickness of the mica tape (total thickness of the mica layer and the backing layer) is not specifically limited, and may be selected depending on the purpose or the like. For example, the average thickness of the mica tape may be 400 $\mu$m or less, preferably 350 $\mu$m or less, more preferably 300 $\mu$m or less.

When the mica tape is used as a prepreg mica tape, from the viewpoint of easiness of winding, the average thickness of the mica tape is preferably 300 $\mu$m or less, more preferably 290 $\mu$m or less. From the viewpoint of electrical insulation, the average thickness of the mica tape is preferably 120 $\mu$m or more, more preferably 150 $\mu$m or more, further preferably 160 $\mu$m or more.

When the mica tape is used as a dry mica tape, from the viewpoint of easiness of winding, the average thickness of the mica tape is preferably 220 $\mu$m or less, more preferably 190 $\mu$m or less. From the viewpoint of electrical insulation, the average thickness of the mica tape is preferably 120 $\mu$m or more, more preferably 150 $\mu$m or more, further preferably 180 $\mu$m or more.

The average thickness of the mica layer is not specifically limited. From the viewpoint of easiness of winding, the average thickness of the mica layer is preferably 180 $\mu$m or less, more preferably 170 $\mu$m or less. From the viewpoint of electrical insulation, the average thickness of the mica layer is preferably 80 $\mu$m or more, more preferably 90 $\mu$m or more.

The average thickness of the backing layer is not specifically limited. From the viewpoint of easiness of winding, the average thickness of the backing layer is preferably 60 $\mu$m or less, more preferably 50 $\mu$m or less. From the viewpoint of strength of the mica tape, the average thickness of the backing layer is preferably 10 $\mu$m or more, more preferably 20 $\mu$m or more.

In this embodiment, the average thickness of the mica tape is an arithmetic average value of the values of the thickness measured at 10 sites with a micrometer (Mitsutoyo Corporation, MDC-SB).

In this embodiment, the average thickness of the mica layer and the backing layer in the mica tape is an arithmetic average value of the values of the thickness measured at 3 sites at a section of the mica tape with a micrometer of a stereo microscope (for example, Olympus Corporation, BX51)

In this embodiment, the flexibility of the mica tape as measured based on JIS-C-2116:2011 is preferably 200 N/m or less, more preferably 180 N/m or less, further preferably 160 N/m or less. When the flexibility of the mica tape is 200 N/m or less, occurrence of wrinkles or cracks in an insulating layer formed by winding the mica tape around an object to be insulated tends to decrease, thereby suppressing reduction in electrical insulation and thermal conductivity.

The mica tape preferably has an apparent volume of the mica of from 2.0 times to 5.0 times larger than the volume of the inorganic filler.

When the apparent volume of the mica is 5.0 times or less the volume of the inorganic filler, thermal conductivity tends to improve. When the apparent volume of the mica is 2.0 times or more the volume of the inorganic filler, occurrence of wrinkles or cracks in an insulating layer while winding the mica tape around an object to be insulated tends to decrease, thereby suppressing formation of voids and reduction in thermal conductivity. In addition, the backing layer, which includes a relatively large amount of inorganic filler and exhibits a relatively high thermal conductivity, tends to contribute largely to the thermal conductivity of the total mica tape. The apparent volume of the mica is more preferably from 3.0 times to 4.0 times, further preferably from 3.2 times to 4.0 times, larger than the volume of the inorganic filler.

The volume of the inorganic filler can be calculated by the following method, for example.

A mica tape (1 cm$^2$) including an inorganic filler is allowed to decompose in a nitric acid aqueous solution, while applying microwaves on a hot plate, thereby preparing a sample solution for measurement. The sample solution is sprayed into plasma, and boron ions generated in the plasma are separated and quantified by a mass spectrometer. Then, the volume of the inorganic filler (cm$^3$) in the mica tape (1 cm$^2$) is calculated by dividing the mass of boron ions by a specific gravity of the inorganic filler.

The apparent volume of the mica can be calculated by the following method, for example.

The thickness (cm) of the mica layer in the mica tape (1 cm$^2$) is calculated and multiplied by 1 (cm$^2$), thereby obtaining an apparent volume of the mica (cm$^3$) in the mica tape (1 cm$^2$).

The average thickness of the mica layer in the mica tape is an arithmetic average value of the values of the thickness measured at 3 sites at a section of the mica tape with a micrometer of a stereo microscope (for example, Olympus Corporation, BX51).

The content of the resin component in the mica tape is not specifically limited, and may be selected depending on the purpose of the mica tape or the like. For example, the content of the resin component may be 40% by mass or less, preferably from 5% by mass to 33% by mass, of the total mass of the backing layer and the mica layer.

When the mica tape is used as a prepreg mica tape, the content of the resin component is preferably from 25% by mass to 33% by mass, more preferably from 25% by mass to 30% by mass, of the total mass of the backing layer and the mica layer, for example. When the content of the resin component is 25% by mass or more, exfoliation of mica or an inorganic filler included in the mica tape as necessary is suppressed, thereby occurrence of cracks, breakage or wrinkles while winding the mica tape around an object to be insulated tends to be suppressed. As a result, reduction in insulation reliability and thermal conductivity tends to be suppressed.

When the content of the resin component is 33% by mass or less, the mica tape can avoid being too thick and a favorable winding property tends to be maintained. In addition, excessive flowage of the resin, which is more than a volume that is necessary to fill in a space between the mica tapes being wound around an object to be insulated, tends to be suppressed. As a result, formation of voids is reduced and reduction in insulation reliability tends to be suppressed.

When the mica tape is used as a dry mica tape, the content of the resin component is preferably from 5% by mass to 15% by mass, more preferably from 5% by mass to 12% by mass, further preferably from 8% by mass to 10% by mass, of the total mass of the backing layer and the mica layer, for example. When the content of the resin component is 5% by mass or more of the total mass of the backing layer and the mica layer, sufficient adhesion between the backing layer and the mica layer tends to be ensured. When the content of the resin component is 15% by mass or less of the total mass of the backing layer and the mica layer, a high thermal conductivity tends to be achieved.

The content of the resin component in the mica tape is calculated by the following method, for example.

The mica tape that is cut into a size of 30 mm in width and 50 mm in length, and heated in an electric furnace at 600°C for 2 hours. Then, the rate of decrease in mass during the heating (%) is calculated by the following formula. This process is performed three times, and an arithmetic average of the results is determined as the content of the resin component in the mica tape.

$$\text{Content of resin component} = \{(\text{mass before heating - mass after heating}) / \text{mass before heating}\} \times 100$$

(Method of producing mica tape)

The method of producing the mica tape of the embodiment is not specifically limited, and may be performed by a known method.

<Cured product of mica tape>

The cured product of a mica tape of the embodiment is obtained by curing the mica tape as described above. More specifically, the cured product is obtained by curing a resin component included in the mica tape, which is in a state of before or after being wound around an object to be insulated. The method for curing is not specifically limited, and may be selected from an ordinary process.

<Insulating material>

The insulating material of the embodiment includes an object to be insulated and an insulating layer that is disposed at at least a surface of the object to be insulated, and the insulating layer is the cured product of the mica tape of the embodiment.

The method of forming an insulating layer by using the mica tape of the embodiment is not specifically limited, and may be performed by an ordinary method. For example, an insulating layer may be formed by heat-pressing the mica tape after winding the same around the object to be insulated in order to allow the resin component, which is included in the mica tape, to flow from the mica tape and fill a space between the overlapping mica tapes, and then curing the resin component (in a case of a prepreg mica tape); or by impregnating the mica tape being wound around the object to be insulated with a resin component by vacuum pressure impregnation (VPI), and then curing the resin component (in a case of a dry mica tape).

The type of the object to be insulated is not specifically limited, and examples thereof include a metal material (such as copper) having a shape of a coil, a rod, a plate or the like.

In a case of forming an insulating layer by winding the mica tape around an object to be insulated, the method is not specifically limited. For example, as shown in Fig. 2, mica tape 10 may be wound around object to be insulated 20 in a spiral manner.

<Mica tape (second embodiment)>

The following are the mica tape, the cured product of the mica tape, and the object to be insulated of the second embodiment, which is also within a scope of the invention. As regards the details and the preferred embodiments of the second embodiment, the details and the preferred embodiments of the first embodiment may be referred to.
<1> A mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces in the mica layer.

<2> The mica tape according to <1>, wherein the mica comprises mica pieces having a particle size of 0.5 mm or more, as measured by a JIS standard sieve, at a proportion of 40% by mass or more of a total of the mica pieces in the mica layer.

<3> The mica tape according to any one of <1> or <2>, wherein an amount of the mica in the mica layer is 200 $g/m^2$ or less.

<4> The mica tape according to any one of <1> to <3>, wherein an average thickness of the mica tape is 300 $\mu$m or less and the mica tape is used as a prepreg mica tape.

<5> The mica tape according to any one of <1> to <3>, wherein an average thickness of the mica tape is 220 $\mu$m or less and the mica tape is used as a dry mica tape.

<6> The mica tape according to any one of <1> to <5>, wherein an average thickness of the mica layer is 180 $\mu$m or less.

<7> The mica tape according to any one of <1> to <6>, wherein the backing layer further comprises an inorganic filler.

<8> The mica tape according to <7>, wherein the inorganic filler comprises boron nitride.

<9> The mica tape according to <7> or <8>, wherein the mica has an apparent volume of from 2.0 times to 5.0 times larger than a volume of the inorganic filler.

<10> The mica tape according to any one of <7> to <9>, wherein the inorganic filler has an average aspect ratio of from 1 to 10.

<11> The mica tape according to any one of <7> to <10>, wherein the inorganic filler has a volume average particle diameter of from 1 $\mu$m to 40 $\mu$m.

<12> The mica tape according to any one of <7> to <11>, wherein a content of the inorganic filler is from 20% by volume to 50% by volume of a total volume of a non-volatile component except for the mica and the backing material.

<13> The mica tape according to any one of <1> to <12>, wherein an average thickness of the mica tape is 120 $\mu$m or more.

<14> The mica tape according to any one of <1> to <13>, further comprising a cured product of a resin component.

<15> The mica tape according to <14>, wherein a content of the resin component is from 25% by mass to 33% by mass of a total mass of the mica layer and the backing layer, and the mica tape is used as a prepreg mica tape.

<16> The mica tape according to <14>, wherein a content of the resin component is from 5% by mass to 15% by mass of a total mass of the mica layer and the backing layer, and the mica tape is used as a dry mica tape.

<17> A cured product of the mica tape according to any one of <1> to <16>.

<18> An insulating product, comprising an object to be insulated and an insulating layer that is disposed at at least a portion of a surface of the object to be insulated, the insulating layer being the cured product of the mica tape according to <17>.

The inventors have found that an insulating layer formed by using a mica tape of the embodiment exhibits superior electrical insulation, as compared to a mica tape in which a proportion of mica pieces having a particle size of 2.8 mm or more is 45% by mass or more of mica pieces in the mica layer. The reason for this is not clear, but it is considered that when the mica layer includes a large amount of mica pieces that are relatively small, a resin component sufficiently fills a space between the mica pieces, thereby suppressing formation of voids in the mica layer.

Further, by using the mica tape of the embodiment, it becomes possible to reduce the thickness of the mica tape while ensuring necessary electrical insulation, because electrical insulation of the insulating layer can be improved without increasing the amount of mica. As a result, it becomes possible to provide a mica tape that is easy to wind around an object to be insulated. In addition, the mica tape of the embodiment makes it possible to form an insulating layer that exhibits excellent reliability in which mica tapes are tightly adhered, by allowing the resin component to sufficiently fill the space between the mica tapes by applying a pressure to the mica tape after winding the same around an object to be insulated.

From the viewpoint of improving electrical insulation, the proportion of mica pieces having a particle size of 2.8 mm or more is preferably from 30% by mass or less, more preferably 20% by mass or less, of the total mica pieces in the mica layer.

From the viewpoint of ensuring sufficient breakdown field strength, the proportion of mica pieces having a particle size of 0.5 mm or more, as measured with a JIS standard sieve, is preferably from 40% by mass or more, more preferably 60% by mass or more, of the total mica pieces in the mica layer.

In this embodiment, the proportion of mica pieces having a particle size of 2.8 mm or more and the proportion of mica pieces having a particle size of 0.5 mm or more, as measured by a JIS standard sieve, of the total mica pieces in the mica layer, may be determined by performing sieving of the mica pieces using a JIS standard sieve, for example.

As a result of the sieving, the amount of mica pieces that do not pass the 2.8 mm meshes, out of the total amount of mica pieces (% by mass), is determined as the proportion of mica pieces having a particle size of 2.8 mm or more as measured by a JIS standard sieve.

As a result of the sieving, the total of the amount of mica pieces that do not pass the 2.8 mm meshes and the amount of mica pieces that do not pass the 0.5 mm meshes, out of the total amount of mica pieces (% by mass), is determined as the proportion of mica pieces having a particle size of 0.5 mm or more as measured by a JIS standard sieve.

<Mica tape (third embodiment)>

The following are the mica tape, the cured product of the mica tape, and the object to be insulated of the third embodiment, which is also within a scope of the invention. As regards the details and the preferred embodiments of the third embodiment, the details and the preferred embodiments of the first embodiment may be referred to.

<1> The mica tape comprising a mica layer including mica and a backing layer including a backing material, the mica tape having an average thickness of 300 $\mu$m or less.

<2> The mica tape according to <1>, wherein an average thickness of the mica layer is 180 $\mu$m or less.

<3> The mica tape according to <1> or <2>, wherein the amount of the mica in the mica layer is 200 $g/m^2$ or less.

<4> The mica tape according to any one of <1> to <3>, wherein the backing layer further comprises an inorganic filler.

<5> The mica tape according to <4>, wherein the inorganic filler comprises boron nitride.

<6> The mica tape according to <4> or <5>, wherein the mica has an apparent volume of from 2.0 times to 5.0 times larger than a volume of the inorganic filler.

<7> The mica tape according to any one of <4> to <6>, wherein the inorganic filler has an average aspect ratio of from 1 to 10.

<8> The mica tape according to any one of <4> to <7>, wherein the inorganic filler has a volume average particle diameter of from 1 $\mu$m to 40 $\mu$m.

<9> The mica tape according to any one of <4> to <8>, wherein a content of the inorganic filler is from 20% by volume to 50% by volume of a total volume of a non-volatile component except for the mica and the backing material.

<10> The mica tape according to any one of <1> to <9>, wherein an average thickness of the mica tape is 120 $\mu$m or more.

<11> The mica tape according to any one of <1> to <10>, further comprising a resin component, and a content of the resin component is from 25% by mass to 33% by mass of a total mass of the mica layer and the backing layer

<12> The mica tape according to <11> that is used as a prepreg mica tape.

<13> A cured product of the mica tape according to any one of <1> to <12>.

<14> An insulating product, comprising an object to be insulated and an insulating layer that is disposed at at least a portion of a surface of the object to be insulated, the insulating layer being the cured product of the mica tape according to <13>.

The mica tape of this embodiment has a total thickness of the mica layer and the backing layer of 300 $\mu$m or less. The mica tape is highly suitable for a process of winding the mica tape around an object to be insulated. In addition, the mica tape of the embodiment makes it possible to form an insulating layer that exhibits excellent reliability in which mica tapes are tightly adhered, by allowing the resin component to sufficiently fill the space between the mica tapes by applying a pressure to the mica tape after winding the same around an object to be insulated.

In the following, the invention is described in detail by referring to the Examples. However, the invention is not limited to these Examples.

<Example 1>

(1) Preparation of mica paper

Mica pieces were obtained by dispersing uncalcined hard mica in water, and a mica paper (mica amount: 180 g/m$^2$) was prepared with a paper machine. The average thickness of the mica paper was 150 $\mu$m. The average thickness of the mica paper was obtained as an arithmetic average value of the values measured at 18 sites with a micrometer (Mitsutoyo Corporation, MDC-SB). In the following, measurement of the average thickness of the mica paper was conducted in the same manner.

The proportion of mica pieces having a particle size of 2.8 mm or more as measured by a JIS standard sieve (% by mass) and the proportion of mica pieces having a particle size of 0.5 mm or more as measured by a JIS standard sieve (% by mass), in the mica pieces used for preparing the mica paper, are shown in Table 1 as the proportion of mica pieces having a particle size of 2.8 mm or more and the proportion of mica pieces having a particle size of 0.5 mm or more, before preparation of the mica tape, respectively.

(2) Preparation of resin varnish

36.7% by mass of phenol novolac epoxy resin as a resin component (The Dow Chemical Company, D.E.N. 438 (D.E.N. is a registered trade name)), 1.1% by mass of boron trifluoride monoethyl amine as a curing accelerator (Fujifilm Wako Pure Chemical Corporation) and 31.1% by mass of methyl ethyl ketone (MEK) as an organic solvent were mixed. Then, 31.1% by mass of boron nitride (volume average particle size: 5 $\mu$m, Denka Company Limited) were added thereto, and further mixed to prepare a resin varnish.

The content of boron nitride in the content of non-volatile components (components other than organic solvent) was 25% by volume.

(3) Preparation of prepreg mica tape

A glass cloth as a backing material (Soyo Co., Ltd., WEA 03G 103, average thickness: 0.030 mm) was placed on the mica paper, and the resin varnish was applied onto a surface of the glass cloth with a roll coater, such that the glass cloth was impregnated with the resin varnish. The impregnation was performed such that the resin component in the resin varnish was allowed to permeate the mica paper. The gap between the roll coater and the glass cloth was adjusted such that the apparent volume of mica was 4.65 times larger than the volume of boron nitride. After drying, a laminate of a mica layer and a glass cloth layer (backing layer) was cut into 100 m in length and 30 mm in width, thereby preparing a prepreg mica tape.

(Particle size of mica pieces after preparation of mica tape)

Mica pieces were obtained from the mica layer separated from the glass cloth layer (backing layer) of the prepreg mica tape by the method as described above, and classified with a JIS standard sieve. The results are shown in Table 1 (Table 1(1) and Table 1(2)) as the proportion of mica pieces having a particle size of 2.8 mm or more and the proportion of mica pieces having a particle size of 0.5 mm or more, after preparation of mica tape.

(Average thickness and maximum thickness of mica paper before/after curing)

The average thickness of the prepreg mica tape before curing was 270 $\mu$m, and the maximum thickness was 276 $\mu$m.

The average thickness of the prepreg mica tape after curing by heating at 170°C for 1 hour was 265 $\mu$m, and the maximum thickness was 273 $\mu$m.

The average thickness and the maximum thickness of the prepreg mica tape before and after the curing were obtained as the arithmetic average value and the maximum value of the thicknesses measured at 10 sites with a micrometer (Mitsutoyo Corporation, MDC-SB), respectively. In the following, the average thickness and the maximum thickness of the prepreg mica tape before and after curing were measured in the same manner.

(Average thickness of mica layer of mica tape before curing)

The average thickness of the mica layer of the prepreg mica tape before curing was 147 $\mu$m. The average thickness of the mica layer was obtained as the arithmetic average value of the thicknesses measured at 3 sites at a section of the prepreg mica tape obtained by cutting in a width direction, with a micrometer of a stereo microscope (for example, Olympus Corporation, BX51).

(Content of resin component)

The rate of decrease in mass during the heating (%) of the prepreg mica tape was measured by the method as described above for three times, and the arithmetic average value thereof was determined as the content of resin component in the mica tape. The result is shown in Table 1. In the following, the content of resin component in the mica tape was measured in the same manner.

(Apparent volume of mica with respect to volume of boron nitride)

The apparent volume of the mica with respect to the volume of the boron nitride (mica/BN) of the prepreg mica tape was calculated by the method as described above. The result is shown in Table 1.

(Flexibility of mica tape)

The flexibility of the prepreg mica tape was measured by a method based on JIS-C-2116:2011. The smaller the measured value is, the more flexible the prepreg mica tape is. Specifically, the measurement was performed on 5 test pieces having a size of 30 mm in width and 50 mm in length, for each of the Examples. The arithmetic average value of the measured values is shown in Table 1.

(4) Preparation of cured laminate 1 of prepreg mica tape

A laminate formed of 16 layers of the prepreg mica tape was prepared, and subjected to heat-pressing at 170°C for 1 hour, thereby obtaining cured laminate 1 in which the resin component is cured. The thermal conductivity and the presence of voids in cured laminate 1 were evaluated by the following manner. The results are shown in Table 1.

(Thermal conductivity)

A sample was prepared by cutting cured laminate 1 into a round shape with 50 mm in diameter, and thermal conductivity (W/(m·K)) of the sample was measured with a measuring device (EKO Instruments, HC-100). The result is shown in Table 1.

(Presence of voids)

Cured laminate 1 was cut in a thickness direction. The surface of the section was smoothed with a polishing paper and platinum was deposited thereon. The section was observed with a scanning electron microscope (SEM) at 30 to 40-fold magnification, and the presence of voids in a region (3 mm in thickness direction and 3 mm in width direction) of the microscope image was evaluated by the following criteria. The result is shown in Table 1.
Voids with 50 $\mu$m in length were not observed ... A
1 to 4 voids with 50 $\mu$m in length were observed ... B
More than 5 voids with 50 $\mu$m in length were observed ... C

(Average aspect ratio of boron nitride)

Cured laminate 1 was cut in a thickness direction, and a surface of the section was smoothed by ion milling and platinum was deposited thereon. The section was observed with a SEM at 3000-fold magnification, and a ratio of the longest diameter to the shortest diameter (longest diameter / shortest diameter) of the 20 representative boron nitride particles was measured. The arithmetic average value of the measured values is determined as the average aspect ratio of the boron nitride.

(5) Preparation of cured laminate 2 of prepreg mica tape

A laminate formed of 3 layers of the prepreg mica tape was prepared, and subjected to heat-pressing at 170°C for 1 hour, thereby obtaining cured laminate 2 in which the resin component is cured. The electrical insulation (breakdown field strength) of cured laminate 2 was evaluated by the following manner. The result is shown in Table 1.

(Breakdown field strength)

The breakdown field strength (kV/mm) of cured laminate 2 was measured with a breakdown field strength tester (Soken Electric Co., Ltd., DAC-6032C). The measurement was performed by sandwiching cured laminate 2 with a pair of cylindrical electrodes (diameter: 10 mm) with an increase rate of 500 V/s, an alternating current of 50 Hz, a cut-off current of 10 mA, at room temperature (25±1 °C) in oil. The result is shown in Table 1.

(6) Formation and evaluation of insulating layer

The prepreg mica tape was wound around a metal plate of 200 mm in length, 30 mm in width and 9 mm in thickness as an object to be insulated, in a spiral manner. The winding was performed in a manner as shown in Fig. 2, i.e., a portion of mica tape 10 wound around object to be insulated 20 was overwrapped with a portion of adjacent mica tape 10, and the winding was performed such that 10 layers of mica tape 10 (a combination of a mica layer and a backing layer is counted as 1 layer) were shown in a section. Then, the resin component is cured by heat-pressing at 170°C for 1 hour, thereby forming an insulating layer.

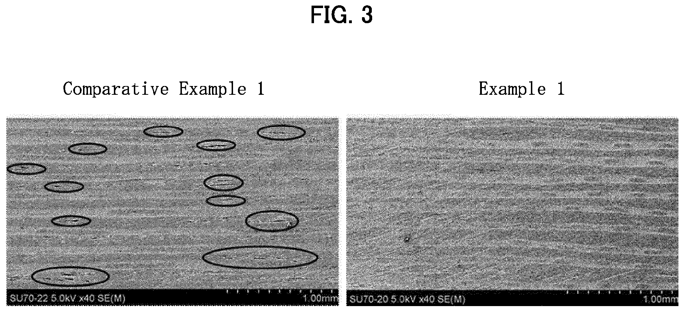

Subsequently, the insulating layer is separated from the metal plate and cut in a thickness direction. A surface of the section was smoothed with a polishing paper and platinum was deposited thereon. The section was observed with a SEM at 30 to 40-fold magnification, and the presence of voids in a region (3 mm in thickness direction and 3 mm in width direction) in a microscope image was examined. As a result, no voids with 50 $\mu$m in length were observed. The SEM image of a section of the insulating layer is shown in Fig. 3.

<Examples 2 to 8, Examples 10 to 14 and Comparative Example 1>

(1) Preparation and evaluation of prepreg mica tape

Prepreg mica tapes of Examples 2 to 8, Examples 10 to 14 and Comparative Example 1 were prepared in a similar manner to Example 1, except that the amount of mica used for preparation of mica paper; the proportion of mica pieces having a particle diameter of 2.8 mm or more or 0.5 mm or more before/after the preparation of mica tape; average thickness of mica paper; average and maximum thicknesses of mica tape before/after curing; average thickness of mica layer of mica tape before curing; content of resin component; average aspect ratio of boron nitride; and apparent volume of mica with respect to volume of boron nitride are the values shown in Table 1, respectively. Then, the flexibility, thermal conductivity, presence of voids and breakdown field strength of the prepreg mica tape were evaluated in the same manner as Example 1. The results are shown in Table 1.

(2) Preparation and evaluation of insulating layer

An insulating layer was formed by using a prepreg mica tape of Comparative Example 1, in a similar manner to Example 1. A SEM image of a section of the insulating layer is shown in Fig. 3. As shown in Fig. 3, voids with 50 $\mu$m in length were observed in the insulating layer.

<Examples 9 and 10>

(1) Preparation of mica paper

Mica pieces were obtained by dispersing uncalcined hard mica in water, and a mica paper with the amount of mica and the proportion of mica pieces as shown in Table 1 was prepared with a paper machine.

(2) Preparation of resin varnish

Bisphenol A epoxy resin as a resin component (Mitsubishi Chemical Corporation, EPIKOTE 828), zinc(II) acetylacetonate as a curing accelerator (Junsei Chemical Co., Ltd.) and methyl ethyl ketone as an organic solvent (Fujifilm Wako Pure Chemicals Corporation) were mixed. Then, boron nitride (volume average particle size: 5 $\mu$m) as an inorganic filler was added thereto, and further mixed to prepare a resin varnish. The ratio of the epoxy resin to the curing accelerator (epoxy resin : curing accelerator) in the mixture was 97 : 3 by mass.

The content of the boron nitride in the non-volatile components (components other than organic solvent) was 25% by volume.

(3) Preparation of dry mica tape

A glass cloth as a backing material (Soyo Co., Ltd., WEA 03G 103) was placed on the mica paper, and the resin varnish was applied onto a surface of the glass cloth with a roll coater, so as to impregnate the glass cloth with the resin varnish. The impregnation was performed such that the resin component in the resin varnish was allowed to permeate a portion of the mica paper, and the mica paper and the glass cloth are bonded with the resin component. The gap between the roll coater and the glass cloth was adjusted such that the apparent volume of mica was 3.11 times larger than the volume of boron nitride. After drying, a laminate of a mica layer and a glass cloth layer (backing layer) was cut into 30 mm in width, thereby preparing a dry mica tape.

The particle size of mica pieces after preparation of mica tape, the average and maximum thicknesses of mica tape before and after curing, the average thickness of mica layer of mica tape before curing, the flexibility of mica tape, and the content of resin component of the dry mica tape were evaluated in the same manner as Example 1. The results are shown in Table 1.

(4) Preparation and evaluation of cured laminate 3 of dry mica tape

A laminate including 10 layers of the dry mica tape was dipped in a resin for impregnation, and the resin component was allowed to penetrate the dry mica tape by VIP. The laminate was subjected to heat-pressing at 130°C for 2 hours, then at 190°C for 2 hours, thereby preparing cured laminate 3.

As the resin for impregnation, a mixture of bisphenol A epoxy resin (Mitsubishi Chemical Corporation, EPIKOTE 828) and a curing agent (Hitachi Chemical Co., Ltd., HN-5500, methylhexahydrophthalic acid anhydride), which were mixed by 1:1 by mass, was used. The thermal conductivity and the presence of voids of the cured laminate 3 were evaluated in the same manner as Example 1. The results are shown in Table 1.

(5) Preparation and evaluation of cured laminate 4 of dry mica tape

A laminate including 3 layers of the dry mica tape was dipped in the resin for impregnation used for the preparation of cured laminate 3, and the resin component was allowed to penetrate the dry mica tape by VIP. The laminate was subjected to heat-pressing at 130°C for 2 hours, then at 190°C for 2 hours, thereby preparing cured laminate 4. The electrical insulation (breakdown field strength) of the cured laminate 4 was evaluated in the same manner as Example 1. The results are shown in Table 1.

(6) Formation and evaluation of insulating layer

The dry mica tape was wound around a metal plate in the same manner as Example 1. This was dipped in the resin for impregnation used for the preparation of cured laminate 3, and the resin component was allowed to penetrate the dry mica tape by VIP. The laminate was subjected to heat-pressing at 130°C for 2 hours, then at 190°C for 2 hours, thereby forming an insluating layer. The presence of voids with 50 $\mu$m in length was examined in the same manner as Example 1. As a result, no voids with 50 $\mu$m in length were observed.

Table 1(1)

| | Example 1 | Example 2 | Example 3 | Example 4 | Example 5 | Example 6 | Example 7 | Example 8 |
|---|---|---|---|---|---|---|---|---|
| Type of mica tape | Prepreg | Prepreg | Prepreg | Prepreg | Prepreg | Prepreg | Prepreg | Prepreg |
| Amount of mica(g/m$^2$) | 180 | 180 | 180 | 180 | 180 | 180 | 100 | 200 |
| Proportion of mica pieces with particle size of 2.8 mm or more after preparation of mica tape (% by mass) | 0 | 0 | 0 | 0 | 18 | 0 | 0 | 0 |

(continued)

|  | Example 1 | Example 2 | Example 3 | Example 4 | Example 5 | Example 6 | Example 7 | Example 8 |
|---|---|---|---|---|---|---|---|---|
| Proportion of mica pieces with particle size of 0.5 mm or more after preparation of mica tape (% by mass) | 66 | 70 | 76 | 63 | 85 | 46 | 63 | 76 |
| Proportion of mica pieces with particle size of 2.8 mm or more before preparation of mica tape (% by mass) | 5 | 5 | 5 | 5 | 25 | 0 | 5 | 5 |
| Proportion of mica pieces with particle size of 0.5 mm or more before preparation of mica tape (% by mass) | 80 | 80 | 80 | 80 | 80 | 43 | 80 | 80 |
| Average thickness of mica paper ($\mu$m) | 150 | 151 | 160 | 151 | 161 | 138 | 107 | 171 |
| Average thickness of mica layer before curing ($\mu$m) | 147 | 141 | 155 | 155 | 154 | 144 | 104 | 180 |
| Maximum thickness of mica tape before curing ($\mu$m) | 276 | 260 | 290 | 300 | 299 | 275 | 234 | 322 |
| Average thickness of mica tape before curing ($\mu$m) | 270 | 240 | 272 | 288 | 277 | 270 | 216 | 312 |
| Maximum thickness of mica tape after curing ($\mu$m) | 273 | 260 | 290 | 298 | 295 | 278 | 225 | 318 |

(continued)

|  | Example 1 | Example 2 | Example 3 | Example 4 | Example 5 | Example 6 | Example 7 | Example 8 |
|---|---|---|---|---|---|---|---|---|
| Average thickness of mica tape after curing ($\mu$m) | 265 | 243 | 274 | 292 | 280 | 271 | 216 | 315 |
| Content of resin component (% by mass) | 27 | 26 | 27 | 31 | 31 | 30 | 27 | 31 |
| Average aspect ratio of boronnitride | 1.4 | 1.4 | 1.4 | 1.4 | 1.4 | 1.4 | 1.4 | 1.4 |
| Mica/BN (vol) | 4.65 | 3.98 | 3.79 | 3.51 | 3.5 | 3.5 | 3.5 | 3.5 |
| Flexibility of mica tape | 65 | 44 | 58 | 76 | 120 | 67 | 50 | 179 |
| Breakdown field strength (kV/mm) | 94 | 92 | 97 | 102 | 105 | 81 | 83 | 87 |
| Thermal conductivity (W/(m·K)) | 0.61 | 0.66 | 0.68 | 0.70 | 0.69 | 0.68 | 0.69 | 0.66 |
| Presence of voids | A | A | A | A | A | B | A | A |

Table 1(2)

|  | Example 9 | Example 10 | Comp. Example 1 | Example 11 | Example 12 | Example 13 | Example 14 |
|---|---|---|---|---|---|---|---|
| Type of mica tape | Dry | Dry | Prepreg | Prepreg | Prepreg | Prepreg | Prepreg |
| Amount of mica (g/m$^2$) | 100 | 200 | 225 | 180 | 180 | 180 | 180 |
| Proportion of mica pieces with particle size of 2.8 mm or more after preparation of mica ta pe (% by mass) | 0 | 0 | 45 | 0 | 0 | 0 | 0 |
| Proportion of mica pieces with particle size of 0.5 mm or more after preparation of mica ta pe (% by mass) | 63 | 76 | 93 | 63 | 63 | 63 | 63 |
| Proportion of mica pieces with particle size of 2.8 mm or more before preparation of mica t ape (% by mass) | 5 | 5 | 50 | 5 | 5 | 5 | 5 |
| Proportion of mica pieces with particle size of 0.5 mm or more before preparation of mica t ape (% by mass) | 80 | 80 | 95 | 80 | 80 | 80 | 80 |

(continued)

|  | Example 9 | Example 10 | Comp. Example 1 | Example 11 | Example 12 | Example 13 | Example 14 |
|---|---|---|---|---|---|---|---|
| Average thickness of mica paper ($\mu$m) | 91 | 171 | 198 | 149 | 151 | 151 | 150 |
| Average thickness of mica lay er before curing ($\mu$m) | 98 | 180 | 200 | 147 | 155 | 155 | 155 |
| Maximum thickness of mica tape before curing ($\mu$m) | 141 | 220 | 368 | 290 | 308 | 305 | 316 |
| Average thickness of mica tape before curing ($\mu$m) | 137 | 215 | 316 | 288 | 299 | 300 | 294 |
| Maximum thickness of mica tape after curing ($\mu$m) | 145 | 225 | 360 | 298 | 315 | 313 | 320 |
| Average thickness of mica tape after curing ($\mu$m) | 133 | 218 | 320 | 290 | 302 | 298 | 300 |
| Content of resin component ( % by mass) | 13 | 15 | 29 | 27 | 28 | 28 | 28 |
| Average aspect ratio of boron nitride | 1.4 | 1.4 | 1.4 | 1 | 7 | 9 | 10 |
| Mica/BN (vol) | 3.11 | 3.11 | 3.5 | 3.51 | 3.51 | 3.5 | 3.51 |
| Flexibility of mica tape | 40 | 190 | 250 | 77 | 80 | 110 | 94 |
| Breakdown field strength (kV/ mm) | 94 | 95 | 73 | 94 | 89 | 88 | 86 |
| Thermal conductivity (W/ (m·K)) | 0.46 | 0.38 | 0.56 | 0.68 | 0.72 | 0.75 | 0.78 |
| Presence of voids | A | A | C | A | A | A | A |

In Table 1, "mica/BN (vol)" refers to a ratio of the apparent volume of mica with respect to the volume of boron nitride.

As shown in Table 1, the mica tape of the Examples, in which the proportion of mica pieces having a particle size of 2.8 mm or more as measured by a JIS standard sieve is less than 45% by mass of the total mica pieces, exhibited an excellent breakdown field strength, and no voids were observed in a cured laminate of the mica tape.

Among the Examples, the mica tape of Examples 1 to 5, in which the proportion of mica pieces having a particle size of 0.5 mm or more as measured by a JIS standard sieve is 60% by mass or more of the total mica pieces, exhibited a higher breakdown field strength than that of the mica tape of Example 6, in which the proportion of mica pieces having a particle size of 0.5 mm or more is less than 60% by mass.

The mica tape of Comparative Example 1, in which the proportion of mica pieces having a particle size of 2.8 mm or more as measured by a JIS standard sieve is over 45% by mass of the total mica pieces, exhibited a lower breakdown field strength than that of the Examples, and voids were observed in a cured laminate of the mica tape.

The results of the measurement of flexibility based on JIS-C-2116:2011 (N/m) showed a trend that the value is increased along with an increase in the proportion of mica pieces having a particle size of 2.8 mm or more (i.e., the mica tapes become harder and become more difficult to bend). From these results, it is considered that the flexibility of the mica tape is improved by reducing the amount of mica or by reducing the proportion of mica pieces having a particle size of 2.8 mm or more.

As shown in Table 1, the mica tape in which an average aspect ratio of boron nitride is in a range of from 1 to 10 and the amount of mica is 200 g/m$^2$ or less exhibit a thermal conductivity of at least 0.65 W/(m·K), as compared with the mica tape of Comparative Example 1, in which the amount of mica is 225 g/m$^2$.

The mica tape of Examples 1 to 5, in which the proportion of mica pieces having a particle size of 0.5 mm or more is 60% by mass or more, included less voids in a cured laminate thereof and exhibited a higher breakdown field strength, as compared with the mica tape of Example 6, in which the proportion of mica pieces having a particle size of 0.5 mm or more is less than 60% by mass.

It is shown that the particle size of mica pieces after the preparation of mica tape tends to be smaller than the particle size of mica pieces before the preparation of mica tape. This is considered to be because a loss of hydrogen bonds, which is due to a hydrophobic resin component that coats a surface of mica pieces during the process of preparing mica tape, results in the reduction in an aggregation force of mica pieces.

**Claims**

1. A coil for a rotating electrical machine, the coil comprising a coil conductor and an insulating layer that is disposed around an outer periphery of the coil conductor, the insulating layer comprising a mica tape, the mica tape comprising a mica layer including mica and a backing layer including a backing material,
   the mica comprising mica pieces having a particle size of 2.8 mm or more, as measured by a JIS standard sieve, at a proportion of less than 45% by mass of a total of the mica pieces that are obtained from the mica layer being separated from the backing layer.

2. The coil for a rotating electrical machine according to claim 1, wherein the mica comprises mica pieces having a particle size of 0.5 mm or more, as measured by a JIS standard sieve, at a proportion of 40% by mass or more of a total of the mica pieces that are obtained from the mica layer being separated from the backing layer.

3. A coil for a rotating electrical machine, the coil comprising a coil conductor and an insulating layer that is disposed around an outer periphery of the coil conductor, the insulating layer comprising a mica tape, the mica tape comprising a mica layer including mica and a backing layer including a backing material,
   the mica comprising mica pieces having a particle size of 2.8 mm or more, as measured by a JIS standard sieve, at a proportion of less than 45% by mass of a total of the mica pieces in the mica layer.

4. The coil for a rotating electrical machine according to claim 3, wherein the mica comprises mica pieces having a particle size of 0.5 mm or more, as measured by a JIS standard sieve, at a proportion of 40% by mass or more of a total of the mica pieces in the mica layer.

5. The coil for a rotating electrical machine according to any one of claim 1 to claim 4, wherein an amount of the mica in the mica layer is 200 g/m$^2$ or less.

6. The coil for a rotating electrical machine according to any one of claim 1 to claim 5, wherein an average thickness of the mica tape is 300 $\mu$m or less.

7. The coil for a rotating electrical machine according to any one of claim 1 to claim 5, wherein an average thickness of the mica tape is 220 $\mu$m or less.

8. The coil for a rotating electrical machine according to any one of claim 1 to claim 7, wherein an average thickness of the mica layer is 180 $\mu$m or less.

9. The coil for a rotating electrical machine according to any one of claim 1 to claim 8, wherein the backing layer further comprises an inorganic filler.

10. The coil for a rotating electrical machine according to claim 9, wherein the inorganic filler comprises boron nitride.

11. The coil for a rotating electrical machine according to claim 9 or claim 10, wherein the mica has an apparent volume of from 2.0 times to 5.0 times larger than a volume of the inorganic filler.

12. The coil for a rotating electrical machine according to any one of claim 9 to claim 11, wherein the inorganic filler has an average aspect ratio of from 1 to 10.

13. The coil for a rotating electrical machine according to any one of claim 9 to claim 12, wherein the inorganic filler has a volume average particle diameter of from 1 $\mu$m to 40 $\mu$m.

14. The coil for a rotating electrical machine according to any one of claim 9 to claim 13, wherein a content of the inorganic filler is from 20% by volume to 50% by volume of a total volume of a non-volatile component except for the mica and the backing material.

15. The coil for a rotating electrical machine according to any one of claim 1 to claim 14, wherein an average thickness of the mica tape is 120 $\mu$m or more.

16. The coil for a rotating electrical machine according to any one of claim 1 to claim 15, wherein the mica tape further comprises a cured product of a resin component.

17. The coil for a rotating electrical machine according to claim 16, wherein a content of the cured product of the resin component is from 25% by mass to 33% by mass of a total mass of the mica layer and the backing layer.

18. The coil for a rotating electrical machine according to claim 16, wherein a content of the cured product of the resin component is from 5% by mass to 15% by mass of a total mass of the mica layer and the backing layer.

19. A mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces that are obtained from the mica layer being separated from the backing layer.

20. The mica tape according to claim 19, wherein the mica comprises mica pieces having a particle size of 0.5 mm or more, as measured by a JIS standard sieve, at a proportion of 40% by mass or more of a total of the mica pieces that are obtained from the mica layer being separated from the backing layer.

21. A mica tape comprising a mica layer including mica and a backing layer including a backing material, the mica comprising mica pieces having a particle size of 2.8 mm or more, as measured by a JIS standard sieve, at a proportion of less than 45% by mass of a total of the mica pieces in the mica layer.

22. The mica tape according to claim 21, wherein the mica comprises mica pieces having a particle size of 0.5 mm or more, as measured by a JIS standard sieve, at a proportion of 40% by mass or more of a total of the mica pieces in the mica layer.

23. The mica tape according to any one of claim 19 to claim 22, wherein an amount of the mica in the mica layer is 200 g/m$^2$ or less.

24. The mica tape according to any one of claim 19 to claim 23, wherein an average thickness of the mica tape is 300 $\mu$m or less and the mica tape is used as a prepreg mica tape.

25. The mica tape according to any one of claim 19 to claim 23, wherein an average thickness of the mica tape is 220 $\mu$m or less and the mica tape is used as a dry mica tape.

26. The mica tape according to any one of claim 19 to claim 25, wherein an average thickness of the mica layer is 180 $\mu$m or less.

27. The mica tape according to any one of claim 19 to claim 26, wherein the backing layer further comprises an inorganic filler.

28. The mica tape according to claim 27, wherein the inorganic filler comprises boron nitride.

29. The mica tape according to claim 27 or claim 28, wherein the mica has an apparent volume of from 2.0 times to 5.0 times larger than a volume of the inorganic filler

30. The mica tape according to any one of claim 27 to claim 29, wherein the inorganic filler has an average aspect ratio of from 1 to 10.

31. The mica tape according to any one of claim 27 to claim 30, wherein the inorganic filler has a volume average particle diameter of from 1 $\mu$m to 40 $\mu$m.

**32.** The mica tape according to any one of claim 27 to claim 31, wherein a content of the inorganic filler is from 20% by volume to 50% by volume of a total volume of a non-volatile component except for the mica and the backing material.

**33.** The mica tape according to any one of claim 19 to claim 32, wherein an average thickness of the mica tape is 120 $\mu$m or more.

**34.** The mica tape according to any one of claim 19 to claim 33, further comprising a resin component.

**35.** The mica tape according to claim 34, wherein a content of the resin component is from 25% by mass to 33% by mass of a total mass of the mica layer and the backing layer, and the mica tape is used as a prepreg mica tape.

**36.** The mica tape according to claim 34, wherein a content of the resin component is from 5% by mass to 15% by mass of a total mass of the mica layer and the backing layer, and the mica tape is used as a dry mica tape.

**37.** A cured product of the mica tape according to any one of claim 19 to claim 36.

**38.** An insulating product, comprising an object to be insulated and an insulating layer that is disposed at at least a portion of a surface of the object to be insulated, the insulating layer being the cured product of the mica tape according to claim 37.

FIG. 1

FIG. 2

# FIG. 3

Comparative Example 1                    Example 1

## INTERNATIONAL SEARCH REPORT

| International application No. |
|---|
| PCT/JP2017/014724 |

| A.   CLASSIFICATION OF SUBJECT MATTER |
|---|
| H02K3/30(2006.01)i, H01B17/60(2006.01)i, H01F5/06(2006.01)i, H01F41/12 (2006.01)i |

According to International Patent Classification (IPC) or to both national classification and IPC

| B.   FIELDS SEARCHED |
|---|
| Minimum documentation searched (classification system followed by classification symbols) |
| H02K3/30, H01B17/60, H01F5/06, H01F41/12 |

| Documentation searched other than minimum documentation to the extent that such documents are included in the fields searched |
|---|
| Jitsuyo Shinan Koho       1922–1996   Jitsuyo Shinan Toroku Koho   1996–2017 |
| Kokai Jitsuyo Shinan Koho   1971–2017   Toroku Jitsuyo Shinan Koho   1994–2017 |

| Electronic data base consulted during the international search (name of data base and, where practicable, search terms used) |
|---|
| |

### C.   DOCUMENTS CONSIDERED TO BE RELEVANT

| Category* | Citation of document, with indication, where appropriate, of the relevant passages | Relevant to claim No. |
|---|---|---|
| X<br>Y | JP 54-36596 A  (Hitachi, Ltd.),<br>17 March 1979 (17.03.1979),<br>claims; page 2, upper left column, line 9 to<br>page 2, lower right column, line 10<br>(Family: none) | 1-4,19-22<br>5-18,23-38 |
| X<br>Y | JP 11-306891 A  (Okabe Mica Co., Ltd.),<br>05 November 1999 (05.11.1999),<br>claims; paragraphs [0016] to [0034]<br>(Family: none) | 1,3,19,21<br>5-18,23-38 |
| X<br>Y | JP 2-304818 A  (Okabe Mica Co., Ltd.),<br>18 December 1990 (18.12.1990),<br>claims; page 2, lower right column, line 10 to<br>page 4, lower right column, line 13<br>(Family: none) | 1,3,19,21<br>5-18,23-38 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 June 2017 (09.06.17) | 20 June 2017 (20.06.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2017/014724 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 54-25498 A  (Hitachi Chemical Co., Ltd.),<br>26 February 1979 (26.02.1979),<br>claims; page 2, upper right column, line 3 to<br>page 5, upper left column, line 6<br>(Family: none) | 1-4,19-22<br>5-18,23-38 |
| Y | WO 2015/114907 A1  (Mitsubishi Electric Corp.),<br>06 August 2015 (06.08.2015),<br>paragraphs [0018], [0020]<br>& US 2016/0329123 A1<br>paragraphs [0024], [0026]<br>& EP 3101665 A1         & CN 105940467 A | 5-18,23-38 |
| Y | JP 2008-27819 A  (Toshiba Corp.),<br>07 February 2008 (07.02.2008),<br>paragraph [0017]<br>(Family: none) | 9-18,27-38 |
| Y | WO 2015/053374 A1  (Hitachi Chemical Co., Ltd.),<br>16 April 2015 (16.04.2015),<br>paragraphs [0033] to [0037]<br>& US 2016/0247595 A1<br>paragraphs [0060] to [0066]<br>& EP 3046117 A1         & CN 105637599 A | 9-18,27-38 |
| Y | JP 2012-38681 A  (Hitachi, Ltd.),<br>23 February 2012 (23.02.2012),<br>paragraph [0001]<br>& US 2012/0038239 A1<br>paragraph [0002]<br>& EP 2418079 A1 | 25,36 |
| Y | JP 2002-93257 A  (Japan Mica Industrial Co., Ltd.),<br>29 March 2002 (29.03.2002),<br>paragraph [0008]<br>(Family: none) | 25,36 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015053374 A